# EUROPEAN PATENT APPLICATION

(11) **EP 4 552 971 A1**
(43) Date of publication of application: **14.05.2025**
(21) Application number: 23383134.6
(22) Date of filing: 07.11.2023
(51) Int. Cl.: B64C 1/06, B64C 3/18

(54) **Y-SHAPED STRINGERS MADE OF COMPOSITE MATERIAL**

(71) Applicant: AIRBUS OPERATIONS, S.L.U., 28906 Getafe, Madrid (ES)
(72) Inventor: JARA RODELGO, Alvaro, 28906 GETAFE (Madrid) (ES); GONZALEZ ANTOHI, Miguel, 28906 GETAFE (Madrid) (ES); DE LA PUERTA VALLEJO, Mikel, 28906 GETAFE (Madrid) (ES)
(74) Representative: Herrero & Asociados, S.L.

(57) **Abstract**

A Y-shaped stringer (100) made of composite material for a panel (1010) of an aircraft, the Y-shaped stringer (100) comprising a stringer web (110) having a cross-section in a I-shape, first and second flanges (130a, 130b) configured to be connectable to the composite panel of the aircraft, an open triangular shape structure (120) comprising first and second lower vertices (120a, 120b) respectively joined to the first and second flanges (130a, 130b) and an upper vertex (120c) connected to a first end of the stringer web (110), wherein the open triangular shape structure (120) and the stringer web (110) form a cross-section in a Y-shape.

## Description

### Object of the invention

The present invention refers to stringers of composite materials, particularly stringers used in the aerospace industry having a Y-shape and methods of manufacturing said stringers.

The stringers according to the present invention can be applied as stiffeners in any part of the airframe of the aircraft.

### Background of the invention

CA2619767A1 relates to a stringer which is made from a composite material, and which is used to stiffen composite panels, particularly those used in the aeronautical industry. The stringer is formed by a base which is used to join the same to the panel and a structural element which is equipped with a structural reinforcement at the end opposite the base, said structural reinforcement being made from high-modulus unidirectional fibres of the same material as the stringer or of another compatible material.

The existing "double T"-section and the "omega"-section stringers have a limited momentum of inertia, and may suffer from buckling and post-buckling, as well as from torsional behavior. Furthermore, other manufacturing requirements such as weight savings and cost savings are beneficial to improve the existing stringers.

The present invention satisfies these demands and solves the drawbacks of the current existing stringers.

### Description of the invention

The present invention proposes a composite material stringer (carbon fiber or glass fiber with thermoset or thermoplastic resin) that can be used as stiffener for (preferably composite) panels formed by joining the base or flanges of the stringer and the panel. The proposed stringer comprises a structural cross-section that has a shape in Y. This shape is specified in the present description as a Y-shape and can correspond to the total or a part of the structural cross-section. The proposed stringer is indicated in the present description as a Y-shaped stringer. The Y-shaped stringer according to the present invention comprises two structural elements: an open triangular shape structure followed by a web that provides a Y-shape ; the stringer's cross-section comprises three branches all joined by one of their ends at the same point, thereby forming the Y-shaped cross-section. The Y-shaped or Y-section stringer made of composite material has various benefits such as better structural efficiency, less or no wrinkles appearing during manufacturing due to high values bending angles, no corrosion and better Non-Destructive Testing (NDT) process.

The Y-shaped stringer can have various shapes and can comprise vertical fins and a cap with different variations. The use of composite materials for this purpose enhances the actual stringer properties, as well as the inspections and repairability.

The Y-shaped stringer according to the present invention provides an optimization of the "double T"-section and the "omega"-section stringers existing in the art. Advantageously, the proposed Y-shaped stringer increases the momentum of inertia, enhances the buckling and post-buckling behavior, as well as the torsional behavior, and provides a new shape been resulting in the most efficient of the shapes. Furthermore, the Y-section optimizes the disposition of stringers due to the wider effective surface of the feet, which implies weight savings, cost savings and a higher ROI.

Hence, in a first aspect, the present invention refers to a Y-shaped stringer made of composite material for a panel of an aircraft. The Y-shaped stringer comprises a stringer web having a cross-section with a I-shape, first and second flanges configured to be connectable to the panel of the aircraft, and an open triangular shape structure comprising first and second lower vertices joined to the first and second flanges, respectively and an upper vertex connected to a first end of the stringer web, wherein the open triangular shape structure and the stringer web form a cross-section in/with a Y-shape.

In a first example, the first and second flanges are established preferably in a perpendicular direction to the stringer web.

In a second example, the stringer web further comprises a cap connected to a second end of the stringer web and that provides the stringer web with a cross-section in a T-shape or in a L-shape or in a J-shape.

In one example, the cap comprises a symmetric laminate composed by a first layer comprising composite laminates that wrap the first and second flanges and the stringer web, wherein a 70% of the total composite laminates from the first layer are oriented at a load angle +/-45°, wherein the load angle is the angle that better support the load with respect to the Y-shaped stringer reference axis, a second layer comprising composite laminates that can be established on top of the first layer wherein a 70% of the total composite laminates from the first layer are oriented at a load angle 0° and a third layer comprising composite laminates that can be established on top of the second one, wherein a 70% of the total composite laminates from the third layer are oriented at a load angle +/-45°.

Graphite fiber-reinforced polymer, CFRP's are made of several layers. Each layer is a "cloth," "ribbon," or "strip" (like a piece of cloth) of carbon fibers. In this "fabric" the fibers can be disordered, woven or mostly oriented in one direction. In general, those that have a main orientation are used, because in this main direction we know that it has resistance to significant loads. Then, when the layers are stacked, each layer can be oriented as desired to adapt the load resistance of the final piece according to the orientations of each of its layers.

In another example, the first and second flanges each comprises a vertical fin established in a parallel direction to the stringer web.

In preferred examples, the composite material comprises carbon fiber with thermoset or thermoplastic resin or glass fiber with thermoset or thermoplastic resin.

Another aspect of the present invention refers to the use of the Y-shaped stringer according to any of the previous claims as stiffener for a panel of an aircraft by joining the first and second flanges of the Y-shaped stringer according to the first aspect of the present invention to the panel of the aircraft.

The step of joining the first and second flanges of the Y-shaped stringer to the composite panel of the aircraft can comprise cocuring or cobounding. In one alternative the step of joining may comprise performing the cocuring of the pieces obtaining a one-way assembly. In another alternative, the joining step could comprise cobounding the first and second flanges of the Y-shaped stringer to the composite panel. A riveting step can be additionally performed after the cobounding.

A third aspect of the present invention refers to a method for manufacturing the Y-shaped stringer according to the first aspect of the present invention, the method comprises placing composite material onto a first mould and a second mould that comprise a moulding curvature (X) having an angle *β* = 360º - *α*, wherein *α* is a working angle formed in a joint between the open triangular shape structure and the first and second flanges, wherein *α* has a value between 100° to 165°. The method further comprises placing composite material onto a third mould, closing the first and second moulds with the third mould to obtain a closed mould that contains a Y-shaped preform, curing the Y-shaped preform with an autoclave cycle.

In one example the method further comprises cutting the Y-shaped preform to obtain the Y-shaped stringer.

In a first example, curing the closed mould with an autoclave cycle comprises curing the closed mould at 180 degrees Celsius.

In another example, the method further comprises placing a rowing in between the first mould and the second moulds.

In another example, the method further comprises obtaining the first, second and the third moulds with thermoplastic material heated above 180 degrees Celsius.

In another example, the method further comprises using carbon fiber with thermoset or thermoplastic resin or glass fiber with thermoset or thermoplastic resin as composite material.

In a preferred example, α is equal to 135°.

In an example, the method of manufacturing according to the third aspect is related to the use of three laminates of composite material. The method comprises placing a first laminate of composite material onto the first mould, placing a second laminate of composite material onto the second mould and placing a third laminate of composite material onto the third mould. Furthermore, closing the first mould and the second mould with a third mould comprises assembling the first mould and the second mould to obtain at least the stringer web and assembling the third mould to the first mould and to the second mould to obtain the open triangular shape structure connected to the stringer web.

### Brief description of the drawings

For a better understanding of the above explanation and for the sole purpose of providing an example, some non-limiting drawings are included that schematically depict a practical embodiment.
Figure 1 shows a first example of the Y-shaped stringer according to the present invention.
Figure 2 shows a second example of the Y-shaped stringer according to the present invention comprising vertical flanges.
Figure 3 shows a third example of the Y-shaped stringer according to the present invention comprising vertical flanges and a cap.
Figure 4 shows different configurations of Y-shaped stringers according to the present invention.
Figure 5 shows a mould used in the manufacturing method according to the present invention.
Figure 6 shows a Y-shaped stringer according to the present invention comprising a rowing.
Figure 7 shows the Y-shaped stringer according to the present invention used as a stiffener.

### Description of a detailed embodiment

The Y-shaped stringers according to the present invention are formed by three different parts: a section in an open triangular shape that enhances the behavior to torsional loads, the flanges connected to the triangular shape that are configured to be joined to the panel or skin of the aircraft and a slim part or stringer web established in a normal direction to the flanges that increases the momentum of inertia and the structural stiffness of the Y-shaped stringers according to the present invention.

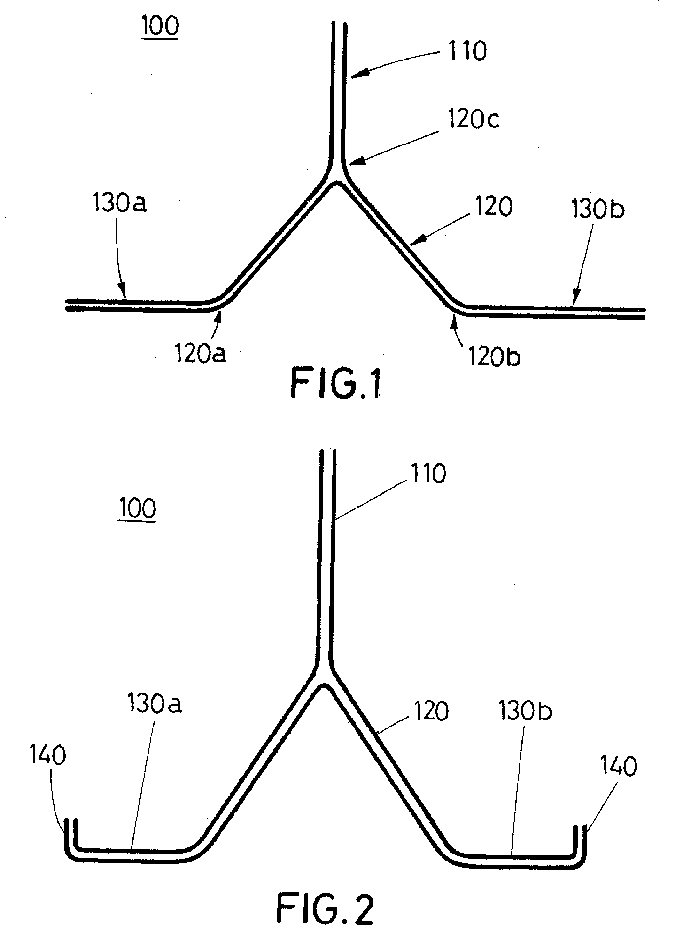

Figure 1 shows a first example of the Y-shaped stringer (100) according to the present invention. The Y-shaped stringer (100) can be made of composite material and can be used for a panel of an aircraft. The panel can be made of composite. The Y-shaped stringer (100) shown in figure 1 comprises a stringer web (110) having a cross-section in a I-shape, an open triangular shape structure (120) that comprises first and second lower vertices (120a, 120b) joined or connected to first and second flanges (130a, 130b). In this example, the first and second flanges (130a, 130b) are established in a perpendicular or normal direction to the stringer web (110). The first and second flanges (130a, 130b) are configured to be connectable to the panel of the aircraft.

Furthermore, the open triangular shape structure (120) comprises an upper vertex (120c) connected to a first end the stringer web (110) having a cross-section in a I-shape. As shown in figure 1, the open triangular shape structure (120) in connection with the stringer web (110) form a cross-section in/with a Y-shape.

Figure 2 shows a second example of the Y-shaped stringer (100) according to the present invention. In this example, the Y-shaped stringer (100) comprises vertical fins (140) connected to the first and second flanges (130a, 130b) and established in a parallel direction to the stringer web (110). The vertical fins (140) can improve the resistance to buckling and post-buckling and the stiffness of the Y-shaped stringer (100).

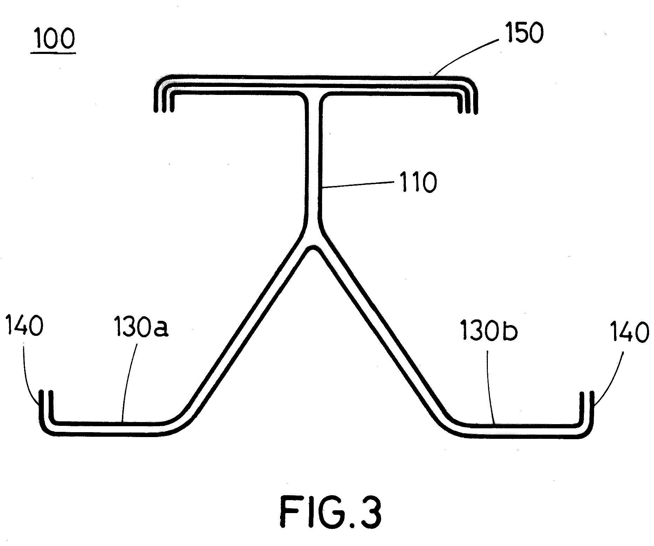

Figure 3 shows a third example of the Y-shaped stringer (100) according to the present invention. The Y-shaped stringer (100) shown in figure 3 comprises all the elements of the example of figure 2 and furthermore it comprises a cap (150) that provides the stringer web (110) with a T-shape.

Composite laminates must be oriented to achieve the best possible properties, to avoid buckling and to prevent warping after manufacturing (the laminate must be symmetrical and balanced). The improvement of the laminate properties is related to where the angles of the fibers are oriented. That is, if the load goes in the direction of 0° according to the Y-shaped stringer reference axis, a greater percentage of laminates will be placed at 0° with respect to the Y-shaped stringer reference axis because that is where the laminates will have the best mechanical properties. The total percentage is divided into laminates at 0°, laminates at 90° and laminates at +/-45°. So, as the different parts of the Y-shaped stringer work differently (lower flanges, stringer web and cap), each part has to have a greater amount of laminates in the orientation in which it is of interest for the best mechanical response. An example of a symmetrical and balanced composite laminate may be: +45 °,-45 °,0 °,90 °,0 °,0 °,90 °,0 °,-45 °,+45 °, which is also written as (+45,-45,0,90,0 )S).

In this example, the cap (150) comprises a symmetric laminate composed by a first layer comprising composite laminates that wrap the first and second flanges (130a, 130b) and the stringer web (110), wherein a 70% of the total composite laminates from the first layer are oriented at a load angle +/-45°, wherein the load angle is the angle of the load with respect to the Y-shaped stringer reference axis, a second layer comprising composite laminates that can be established on top of the first layer wherein a 70% of the total composite laminates from the first layer are oriented at a load angle 0°, and a third layer comprising composite laminates that can be established on top of the second one, wherein a 70% of the total composite laminates from the third layer are oriented at a load angle +/-45°.

The third example of the Y-shaped stringer (100) is the most complete Y-shaped stringer section that can improve the behavior of the Y-shaped stringer (100) in the main load direction, enhancing the momentum of inertia and the elastic modulus (E), increasing the stiffness of the stringer, and consequently, of the panel.

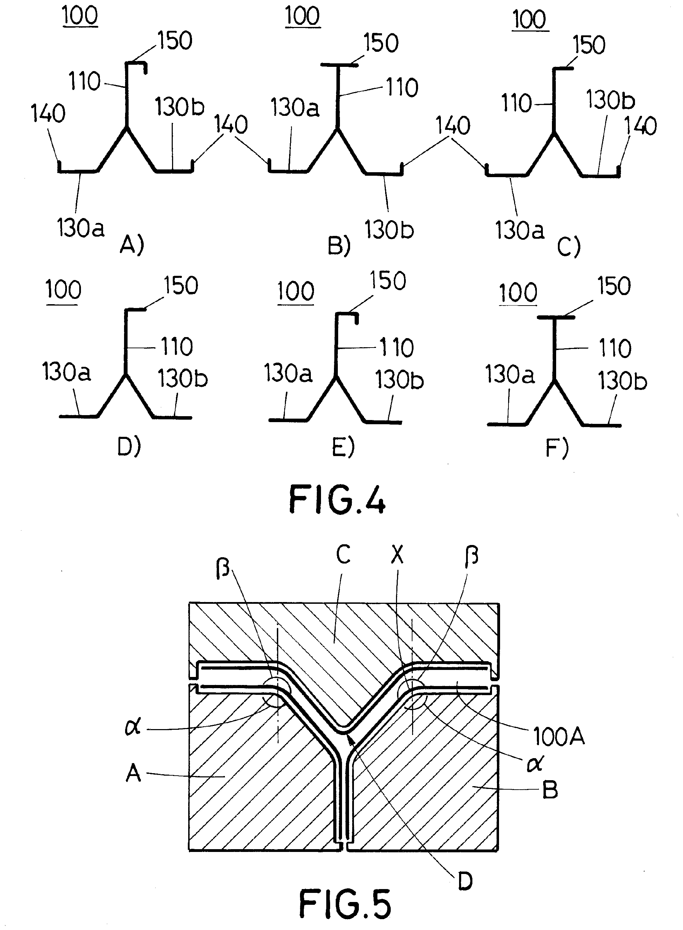

Figure 4 shows different configurations or alternatives of Y-shaped stringers according to the present invention, wherein the cap (150) provides the stringer web (110) having a cross-section in a T-shape, L-shape or a J-shape. In particular:
Figure 4A shows the Y-shaped stringer (100) having vertical fins (140) and a cap (150) that provides the stringer web (110) with a J-shape cross-section.
Figure 4B shows the Y-shaped stringer (100) having vertical fins (140) and a cap (150) that provides the stringer web (110) with a T-shape cross-section similar to the example shown in figure 3.
Figure 4C shows the Y-shaped stringer (100) having vertical fins (140) and a cap (150) that provides the stringer web (110) with a L-shape cross-section.
Figure 4D shows the Y-shaped stringer (100) having a cap (150) that provides the stringer web (110) with a L-shape cross-section but without vertical fins (140).
Figure 4E shows the Y-shaped stringer (100) having a cap (150) that provides the stringer web (110) with a J-shape cross-section but without vertical fins (140).
Figure F shows the Y-shaped stringer (100) having a cap (150) that provides the stringer web (110) with a T-shape cross-section but without vertical fins (140).

Figure 5 shows a mould used in the manufacturing method according to the present invention.

Figure 5 shows a first mould (A) and a second mould (B) that comprise a moulding curvature (X) having an angle *β* = 360º - *α*, wherein *α* is a working angle formed in a joint between the open triangular shape structure (120) and the first and second flanges (130a, 130b) of the Y-shaped stringer (100), wherein *α* has a value between 100° to 165°.

The angles *β* and *α* can be adapted to optimize the load transmission but ensuring that no wrinkles are formed during the manufacturing process of the Y-shaped stringer (100). An optimum working angle can be e.g., 135°.

Furthermore, figure 5 shows a third mould (C) that closes the first mould (A) and second mould (B) to obtain a Y-shaped preform (100A). The Y-shaped preform (100A) is composed by laminates and between the laminates a rowing (D) can be placed to ensure that no voids are created in the joint of the laminates.

The manufacturing process of the Y-shaped stringer (100) can comprise placing composite material onto the first mould (A) and placing composite material onto the second mould (B) that comprise the moulding curvature (X) having an angle *β* = 360º - *α*, and placing composite material onto the third mould (C), and closing the first mould (A) and the second mould (B) with the third mould (C) to obtain a closed mould that contains the Y-shaped preform (100A), and curing the Y-shaped preform (100A) with an autoclave cycle.

Additionally, the method can comprise cutting the Y-shaped preform (100A) to obtain the Y-shaped stringer (100).

In one example, the cheapest manufacturing option for a Y-shaped stringer (100) and the most suitable option for production would be the stringer without vertical fins (140) and a stringer web (110) with a I-shape without the cap (150). This Y-shaped stringer (100) can have an optimal structural behavior and could easily be mass-produced with a fast prototyped mould using 3D printing techniques.

In a particular example, the manufacturing of Y-shaped stringer (100) comprises the manufacturing of the first mould (A), the second mould (B) and the third mould (C) with 3D printing, a fiber placement process over the first mould (A) and the second mould (B) of pre impregnated fibre or dry fibre that can be infused with resin, the closing of the first mould (A) and the second mould (B) with the third mould (C) conforming the Y-shaped preform (100A), the use of an autoclave cycle at 180° or lower to optimize the in-service temperature of the Y-shaped stringer (100), and a last additional step of cutting the Y-shaped preform (100A) to optimize the final shape and to obtain the Y-shaped stringer (100).

In another example, the manufacturing of Y-shaped stringer (100) comprises using three layers of laminates and the step of placing composite material onto a first mould (A) and a second mould (B) comprises and performing the steps of placing a first laminate of composite material onto the first mould (A) and placing a second laminate of composite material onto the second mould (B). Placing composite material onto a third mould (C) comprises placing a third laminate of composite material onto the third mould (C). Furthermore, closing the first mould (A) and the second mould (B) with a third mould (C) comprises assembling the first mould (A) and the second mould (B) to obtain at least the stringer web (110) and assembling the third mould (C) to the first mould (A) and to the second mould (B) to obtain the open triangular shape structure (120) connected to the stringer web (110).

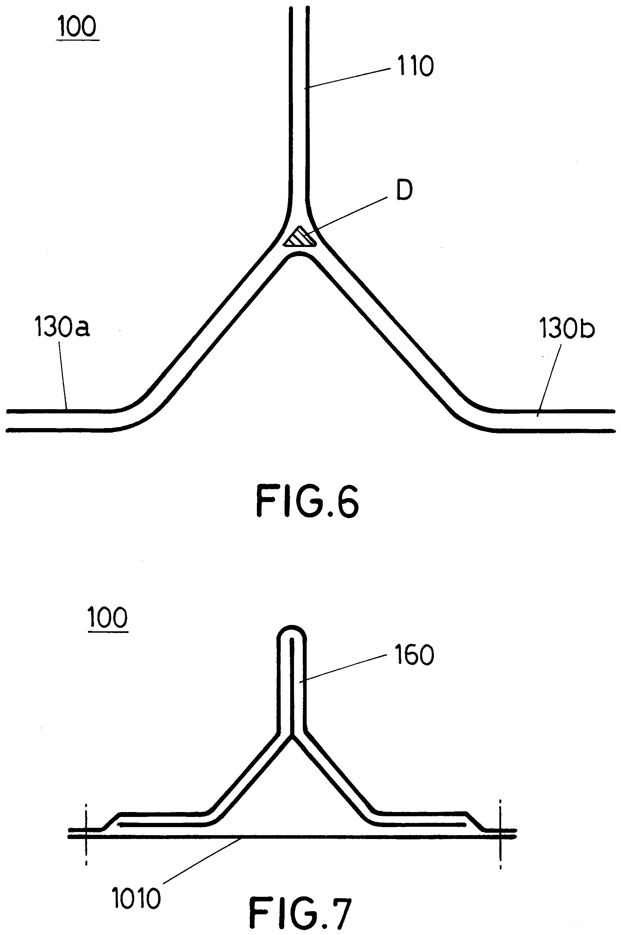

Figure 6 shows a Y-shaped stringer according to the present invention wherein the rowing (D) is shown. The rowing (D) is positioned in between the different plies, that will allow to avoid possible voids in the joint of the different plies. The rowing (D) has the function of filling a gap that can remain when joining parts of the stringer, ensuring that the stringer comprises fiber continuity without excess resin in a central area of the stringer to avoid the risk of breakage of the stringer in that central area.

Figure 7 shows the Y-shaped stringer (100) according to the present invention used as a stiffener for a panel (1010) of an aircraft by joining the first and second flanges (130a, 130b) of the Y-shaped stringer (100) to the composite panel (1010) of the aircraft as shown in figure 7. The panel (1010) can be a composite panel.

The joining of the first and second flanges (130a, 130b) of the Y-shaped stringer (100) to the panel (1010) of the aircraft can comprise in a first alternative cocuring or in a second alternative cobounding.

It is important to notice that this shape still allows the usage of mouseholes (160) without affecting the structural behavior while reducing weight. The mouseholes (160) are holes made in the ribs of the structure of the aircraft to help positioning and assembling the wing's structure or systems. These holes also permit the interconnection of fuel tanks or other aircraft systems

## Claims

1. A Y-shaped stringer (100) made of composite material for a panel (1010) of an aircraft, the Y-shaped stringer (100) comprising:
- a stringer web (110) having a cross-section in a I-shape;
- first and second flanges (130a, 130b) configured to be connectable to the composite panel of the aircraft;
- an open triangular shape structure (120) comprising:
first and second lower vertices (120a, 120b) respectively joined to the first and second flanges (130a, 130b); and
an upper vertex (120c) connected to a first end of the stringer web (110);
wherein the open triangular shape structure (120) and the stringer web (110) form a cross-section in a Y-shape.

2. The Y-shaped stringer (100) according to claim 1, wherein the first and second flanges (130a, 130b) are established in a perpendicular direction to the stringer web (110).

3. The Y-shaped stringer (100) according to claims 1 or 2, wherein the stringer web (110) further comprises a cap (150) connected to a second end of the stringer web (110) that provides the stringer web (110) with a cross-section in a T-shape or in a L-shape or in a J-shape.

4. The Y-shaped stringer (100) according to the previous claim, wherein the cap (150) comprises a symmetric laminate composed by:
- a first layer comprising composite laminates that wrap the first and second flanges (130a, 130b), the stringer web (110) and the cap (150), wherein a 70% of the total composite laminates from the first layer are oriented at a load angle +/-45°, wherein the load angle is the angle of the load with respect to the Y-shaped stringer reference axis;
- a second layer comprising composite laminates that can be established on top of the first layer wherein a 70% of the total composite laminates from the first layer are oriented at a load angle 0°, and
- a third layer comprising composite laminates that can be established on top of the second one, wherein a 70% of the total composite laminates from the third layer are oriented at a load angle +/-45°.

5. The Y-shaped stringer (100) according to any of the preceding claims, wherein the first and second flanges (130a, 130b) comprise vertical fins (140) established in a preferably parallel direction to the stringer web (110).

6. The Y-shaped stringer (100) according to any of the preceding claims, wherein the composite material comprises carbon fiber with thermoset or thermoplastic resin or glass fiber with thermoset or thermoplastic resin.

7. Use of the Y-shaped stringer (100) according to any of the preceding claims as stiffener for a panel (1010) of an aircraft by joining the first and second flanges (130a, 130b) of the Y-shaped stringer (100) to the panel (1010) of the aircraft.

8. The use of the Y-shaped stringer (100) according to the previous claim, wherein joining the first and second flanges (130a, 130b) of the Y-shaped stringer (100) to the panel (1010) of the aircraft comprises cocuring or cobounding.

9. Method for manufacturing the Y-shaped stringer (100) according to claims 1 to 6, the method comprising:
- placing composite material onto a first mould (A) and a second mould (B) that each comprise a moulding curvature (X) having an angle *β* = 360º - *α*, wherein *α* is a working angle formed in a joint between the open triangular shape structure (120) and the first and second flanges (130a, 130b), wherein *α* has a value between 100° to 165°;
- placing composite material onto a third mould (C);
- closing the first mould (A) and the second mould (B) with the third mould (C) to obtain a closed mould that contains a Y-shaped preform (100A); and
curing the Y-shaped preform (100A) with an autoclave cycle to obtain the Y-shaped stringer (100).

10. The method according to claim 9, further comprising cutting the Y-shaped stringer (100).

11. The method according to claims 9 or 10, wherein curing the Y-shaped preform (100A) with an autoclave cycle comprises curing the Y-shaped preform (100A) at 180 degrees Celsius or less.

12. The method according to claims 9 to 11, further comprising placing a rowing (D) in between the first and second moulds (A, B).

13. The method according to claims 9 to 12, further comprising:
- obtaining the first mould (A), the second mould (B) and the third mould (C) with 3D printing.

14. The method according to claims 9 to 14, wherein α is equal to 135°.

15. The method according to claims 9 to 15, wherein placing composite materia onto a first mould (A) and a second mould (B) comprises:
placing a first laminate of composite material onto the first mould (A); and
placing a second laminate of composite material onto the second mould (B);
wherein placing composite material onto a third mould (C) comprises placing a third laminate of composite material onto the third mould (C);
wherein closing the first mould (A) and the second mould (B) with a third mould (C) comprises:
assembling the first mould (A) and the second mould (B) to obtain at least the stringer web (110); and
assembling the third mould (C) to the first mould (A) and to the second mould (B) to obtain the open triangular shape structure (120) connected to the stringer web (110).
